# EUROPÄISCHE PATENTANMELDUNG

(11) **EP 2 777 375 A1**
(43) Veröffentlichungstag der Anmeldung: **17.09.2014**
(21) Anmeldenummer: 14401032.9
(22) Anmeldetag: 07.03.2014
(51) Int. Cl.: A01C 7/06, A01C 15/00

(54) **Kombinierte landwirtschaftliche Verteilmaschine**

(30) Priorität: 12.03.2013 DE 102013102434
(71) Anmelder: Amazonen-Werke H. Dreyer GmbH & Co. KG, 49205 Hasbergen (DE)
(72) Erfinder: Brinkmann, Stefan, 49143 Bissendorf-Natbergen (DE); Goretzko, Robert, 28309 Bremen (DE); Mertens, Daniel, 26135 Oldenburg (DE)

(57) **Zusammenfassung**

Kombinierte landwirtschaftliche Verteilmaschine, bestehend aus einer Einzelkornsämaschine (1) mit mehreren beabstandet zueinander angeordneten Vereinzelungsaggregaten (2) mit zugeordneten Saatgutbehältern (3) und diese verschließenden Deckelelementen (4) und zumindest einem erhöht gegenüber den die Saatgutbehälter (3) verschließenden Deckelelemente (4) angeordneten Behälter (5) zur Aufnahme von weiteren zu verteilenden Materialien, wie Düngemitteln und/oder Mikrogranulaten, wobei an zumindest einem Saatgutbehälter (3) unmittelbar oberhalb des den Saatgutbehälter (3) verschließenden Deckelelementes (4) ein insbesondere als rechteckige Trittstufe (10) ausgebildetes Auftrittelement (11) gegenüber dem Saatgutbehälter 83) verschwenkbar angeordnet ist. Um mit einfachen Maßnahmen ein für den Bediener sicher und entsprechend den bestehenden Sicherheitsvorschriften ausgestaltetes Auftrittelement (11) zu schaffen, ist vorgesehen, dass das Auftrittelement (11) an drei Seiten der Trittstufe (10) ein die Trittstufe (10) in erhöhter Weise überragende Sicherheitskantenelement (12) aufweist.

## Beschreibung

Die Erfindung betrifft eine kombinierte landwirtschaftliche Verteilmaschine gemäß des Oberbegriffes des Patentanspruches 1.

Eine derartige kombinierte landwirtschaftliche Verteilmaschine ist in der Praxis bekannt geworden. Derartige Verteilmaschinen, wie sie beispielsweise in der DE 36 05 073 A1 gezeigt sind, bestehen aus einer Einzelkornsämaschine mit mehreren beabstandet zueinander angeordneten Vereinzelungsaggregaten mit zugeordneten Saatgutbehältern und diese verschließenden Deckelelementen und zumindest einem erhöht gegenüber den die Saatgutbehälter verschließenden Deckelelemente angeordneten Behälter zur Aufnahme von weiteren zu verteilenden Materialien, wie Düngemitteln und/oder Mikrogranulaten. An zumindest einem Saatgutbehälter ist unmittelbar oberhalb des den Saatgutbehälter verschließenden Deckelelementes ein insbesondere als rechteckige Trittstufe ausgebildetes Auftrittelement gegenüber dem Saatgut verschwenkbar angeordnet. Dieses Auftrittelement kann der Bediener nutzen, um in erhöhter Position den erhöht angebrachten Behälter zur Aufnahme von Düngemitteln zu befüllen. Dieses bekannte Auftrittelement ist jedoch unzureichend im Hinblick auf die bestehenden Sicherheitsvorschriften ausgestaltet.

Der Erfindung liegt die Aufgabe zu Grunde mit einfachen Maßnahmen ein für den Bediener sicher und entsprechend den bestehenden Sicherheitsvorschriften ausgestaltetes Auftrittelement zu schaffen.

Diese Aufgabe wird erfindungsgemäß dadurch gelöst, dass das Auftrittelement an drei Seiten der Trittstufe ein die Trittstufe in erhöhter Weise überragende Sicherheitskantenelement aufweist.

Infolge dieser Maßnahmen wird durch die in erhöhter Weise überragenden Sicherheitskantenelemente ein abrutschen des Bediener aus mit seinen Füßen von dem Auftrittelement verhindert.

Um eine ausreichende Sicherheit zu gewährleisten, ist vorgesehen, dass das Sicherheitskantenelement gegenüber der Trittfläche der Trittstufe des Auftrittelementes eine Höhe von zumindest 5 cm aufweist.

Bei einer Verteilmaschine, wobei das Deckelelement mittels Schwenkbolzen aufweisender Schwenkgelenke an dem Saatgutbehälter verschwenkbar befestigt ist, ist vorgesehen, dass das Auftrittelement über die Schwenkbolzen der Schwenkgelenke, mit denen das Deckelelement an dem Saatgutbehälter befestigt ist, an dem Saatgutbehälter schwenkbar befestigt ist. Hierdurch wird eine einfache Befestigungs- und eine Verschwenkmöglichkeit des Auftrittelementes geschaffen.

Um einen einfachen und sicheren Aufstieg des Bedieners zu dem oberhalb des Deckelelementes des Saatgutbehälters angebrachten Auftrittelementes zu ermöglichen, ist vorgesehen, dass weitere Auftrittelemente mit an zumindest zwei Seiten der Trittstufe in erhöhter Weise überragenden Sicherheitskantenelemente an der Maschine angeordnet sind.

Um ein einfaches Erreichen des oberhalb des Deckelelementes des Saatgutbehälters angebrachten Auftrittelementes zu ermöglichen, ist vorgesehen, dass Auftrittelemente in treppenartiger Weise zueinander angeordnet sind.

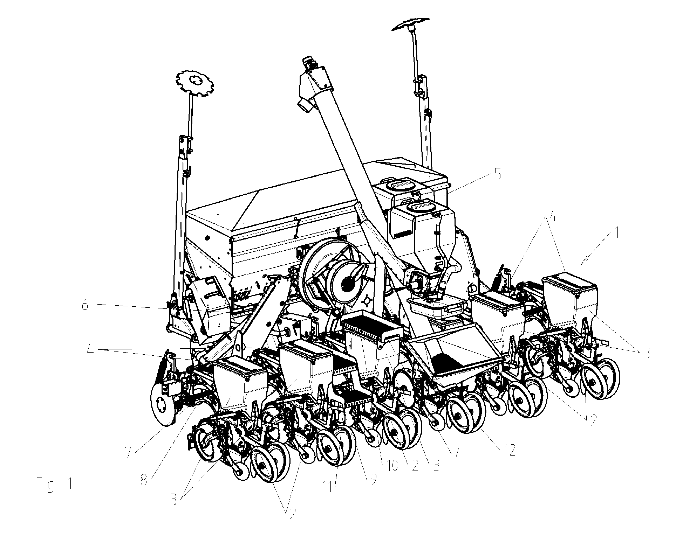

Weitere Einzelheiten der Erfindung sind der Beispielsbeschreibung zu entnehmen. Die Zeichnungen zeigen
- Fig.1: kombinierte landwirtschaftliche Verteilmaschine in perspektivischer Darstellung und

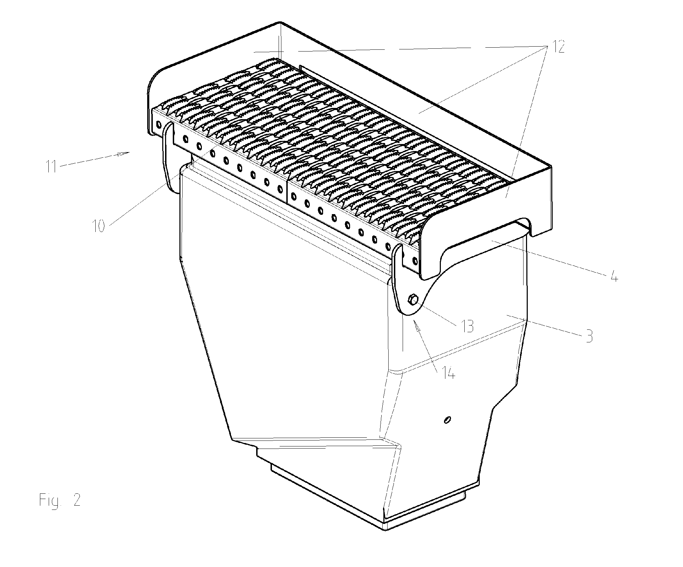

- Fig. 2: das oberhalb des Deckelelementes des Saatgutbehälters angebrachte erfindungsgemäße Auftrittelement in perspektivischer Darstellung.

Die kombinierte landwirtschaftliche Verteilmaschine besteht aus einer Einzelkornsämaschine 1 mit mehreren beabstandet zueinander angeordneten Vereinzelungsaggregaten 2 mit zugeordneten Saatgutbehältern 3 und diese verschließenden Deckelelementen 4 und zumindest einem erhöht gegenüber den die Saatgutbehälter 3 verschließenden Deckelelementen 4 angeordneten Behälter 5 zur Aufnahme von weiteren zu verteilenden Materialien, wie Düngemitteln und/oder Mikrogranulaten. Der Behälter 5 zur Aufnahme von Düngemitteln und/oder Mikrogranulaten ist an einem Rahmen 6 angeordnet. An diesem Rahmen 6 sind auf dessen Vorderseite Kopplungselemente zur Ankupplung der Verteilmaschine an die Kupplungselemente eines die Verteilmaschine ziehenden Ackerschleppers angeordnet. An der Rückseite dieses Rahmens 6 ist ein Querbalken 7 mittels Verbindungselementen angeordnet. An diesen Querbalken 7 sind mittels bewegbarer Verbindungsgestänge 8 die Vereinzelungsaggregate 2 angeordnet. Zwischen zwei Vereinzelungsaggregaten 2 sind Auftrittelemente 9 in treppenartiger Weise zueinander angeordnet. Über diese Auftrittelemente 9 ist ein unmittelbarer Zugang zu einem oberhalb des Deckelelementes 4 eines Saatgutbehälters 2 der Vereisungsaggregate 3 angeordnetes Auftrittelement 10 von dem Bediener zu erreichen.

Dieses zumindest an einem Saatgutbehälter 3 unmittelbar oberhalb des den Saatgutbehälter 3 verschließenden Deckelelementes 4 angeordnet und als rechteckige Trittstufe 10 ausgebildetes Auftrittelement 11 ist gegenüber dem Saatgutbehälter 3 verschwenkbar angeordnet. Das Auftrittelement 11 weist an drei Seiten der Trittstufe 10 ein die Trittstufe 10 in erhöhter Weise überragende Sicherheitskantenelemente 12 aufweist. Hierdurch ist sichergestellt, dass der Bediener auf der Trittstufe 10 einen sicheren Halt hat und auch ohne Hinschauen die Trittstufe 10 sicher treffen kann. Hierzu weisen die Sicherheitskantenelemente 12 gegenüber der Trittfläche der Trittstufe 10 eine Höhe von zumindest 5 cm auf.

Das Deckelelement 4 ist mittels Schwenkbolzen 13 aufweisender Schwenkgelenke 14 an dem Saatgutbehälter 3 verschwenkbar befestigt. Das Auftrittelement 11 ist über die Schwenkbolzen 13 der Schwenkgelenke 14, mit denen das Deckelelement 4 an dem Saatgutbehälter 3 befestigt ist, an dem Saatgutbehälter 3 schwenkbar befestigt.

Es können weitere Auftrittelemente mit an zumindest zwei Seiten der Trittstufe in erhöhter Weise überragenden Sicherheitskantenelemente an der Maschine oder den anderen Saatgutbehältern 3 angeordnet sein.

## Patentansprüche

1. Kombinierte landwirtschaftliche Verteilmaschine, bestehend aus einer Einzelkornsämaschine (1) mit mehreren beabstandet zueinander angeordneten Vereinzelungsaggregaten (2) mit zugeordneten Saatgutbehältern (3) und diese verschließenden Deckelelementen (4) und zumindest einem erhöht gegenüber den die Saatgutbehälter (3) verschließenden Deckelelemente (4) angeordneten Behälter (5) zur Aufnahme von weiteren zu verteilenden Materialien, wie Düngemitteln und/oder Mikrogranulaten, wobei an zumindest einem Saatgutbehälter (3) unmittelbar oberhalb des den Saatgutbehälter (3) verschließenden Deckelelementes (4) ein insbesondere als rechteckige Trittstufe (10) ausgebildetes Auftrittelement (11) gegenüber dem Saatgutbehälter verschwenkbar angeordnet ist, **dadurch gekennzeichnet, dass** das Auftrittelement (11) an drei Seiten der Trittstufe (10) ein die Trittstufe (10) in erhöhter Weise überragende Sicherheitskantenelemente (12) aufweist.

2. Verteilmaschine nach Anspruch 1, **dadurch gekennzeichnet, dass** das Sicherheitskantenelement (12) gegenüber der Trittfläche der Trittstufe (11) eine Höhe von zumindest 5 cm aufweist.

3. Verteilmaschine nach zumindest einem der vorstehenden Ansprüche, wobei das Deckelelement (4) mittels Schwenkbolzen (13) aufweisender Schwenkgelenke (14) an dem Saatgutbehälter (3) verschwenkbar befestigt ist, **dadurch gekennzeichnet, dass** das Auftrittelement (11) über die Schwenkbolzen (13) der Schwenkgelenke (14), mit denen das Deckelelement (4) an dem Saatgutbehälter (3) befestigt ist, an dem Saatgutbehälter (3) schwenkbar befestigt ist.

4. Verteilmaschine nach zumindest einem der vorstehenden Ansprüche, **dadurch gekennzeichnet, dass** weitere Auftrittelemente mit an zumindest zwei Seiten der Trittstufe in erhöhter Weise überragenden Sicherheitskantenelemente an der Maschine angeordnet sind.

5. Verteilmaschine nach Anspruch 4, **dadurch gekennzeichnet, dass** Auftrittelemente (9) in treppenartiger Weise zueinander angeordnet sind.
